# EUROPEAN PATENT SPECIFICATION

(11) **EP 3 264 950 B1**
(45) Date of publication and mention of the grant of the patent: **01.07.2020**
(21) Application number: 16715885.6
(22) Date of filing: 01.03.2016
(51) Int. Cl.: A47J 31/36, A47J 31/44

(54) **DEVICE FOR THE INTRODUCTION AND BLOCK OF THE FILTER HOLDER IN COFFEE MACHINES**
VORRICHTUNG ZUM EINBRINGEN UND BLOCKIEREN DES FILTERHALTERS IN KAFFEEMASCHINEN
DISPOSITIF POUR L'INTRODUCTION ET LE BLOCAGE DU PORTE-FILTRE DANS DES MACHINES À CAFÉ

(30) Priority: 02.03.2015 IT UB20150185
(43) Date of publication of application: 10.01.2018
(73) Proprietor: Ambrodesign S.a.s. di Marco Ambrosini & C., 37137 Verona (IT)
(72) Inventor: AMBROSINI, Marco, 37137 Verona (IT)
(74) Representative: Luppi, Emanuele
(86) International application number: PCT/IB2016/051116
(87) International publication number: WO 2016/139571

(56) References cited:
- EP-A1- 0 838 185
- EP-A1- 2 599 413
- WO-A1-2014/037495
- DE-A1- 1 454 200

## Description

### Technical Field

The present invention relates to a device for the introduction and block of the filter holder in coffee machines.

### Background Art

Commonly, in coffee preparation, especially in cafes and restaurants, the operators fill the filter holder with the required dose of coffee, compress the dose in the filter, and then insert the filter holder with the compressed dose in the brewing coffee machine in order to brew coffee in the cup.

At the end of brewing, the operator will pull out the filter holder and remove the coffee residual grounds.

The aforementioned operations are made manually by the operators and involve a considerable waste of time and physical effort.

A drawback of this known coffee brewing technique is that there are a lot of manual operations and all require a certain time interval so that the coffee can be brewed properly.

Some of these operations, on the other hand, require physical strength by the operators themselves, such as e.g. the interlocking operation of the filter holder in the brewing coffee machine, an operation that requires a force such as to guarantee the hermetic seal between the filter holder and the brewing coffee machine itself.

This drawback is worse if you consider the large amounts of coffee that are normally required in the cafes and restaurants, with the operators who will inevitably get tired thus lowering their productivity.

The need is therefore known to automate these operations for coffee brewing. In this regard, a known solution enabling automation of the introduction and blocking operations of the filter holder to the dispensing assembly of professional coffee machines is described in the European Patent EP 2599413. The invention described in this patent relates to a device consisting of a movable body applied on slides fixed to the machine and having one seat in which the filter holder is manually insertable.

Such device is characterized by the fact of having an automatism enabling the movable body to lift as far as the filter holder moves against the dispensing assembly, compressing it on the same until it adheres completely to the dispensing assembly itself.

The aforementioned automatism provides for the use of an eccentric cam the rotation of which allows the lifting of the movable body.

This embodiment is however susceptible of further improvements.

In this regard, it is underlined that the automatism with eccentric cam does not ensure a perfect adhesion between the filter holder and the dispensing assembly. To ensure a tight sealing between the filter holder and the dispensing assembly, in fact, the filter holder has to be crushed as far as reaching considerable pressure and a very high blocking force, e.g. higher than 1000 N.

The kinematic mechanism described above does not ensure a similar sealing and this leads to problems in the coffee brewing stage.

A special type of coffee machine is disclosed in the patent document WO 2014/037495.

### Description of the Invention

The main aim of the present invention is to provide a device for the introduction and block of the filter holder in coffee machines which enables to automate the operations of insertion and compression of the filter holder ensuring the successful brewing of coffee.

One object of the present invention is to provide a device for the introduction and block of the filter holder in coffee machines which can be applied to already existing machines.

Another object of the present invention is to provide a device for the introduction and block of the filter holder in coffee machines which allows to overcome the mentioned drawbacks of the prior art within the ambit of a simple, rational, easy and effective to use as well as affordable solution.

The above mentioned objects are achieved by the present device for the introduction and block of the filter holder in coffee machines having the characteristics of claim 1.

### Brief Description of the Drawings

Other characteristics and advantages of the present invention will become better evident from the description of a preferred, but not exclusive, embodiment of a device for the introduction and block of the filter holder in coffee machines, illustrated by way of an indicative, but non-limiting example, in the accompanying drawings in which:

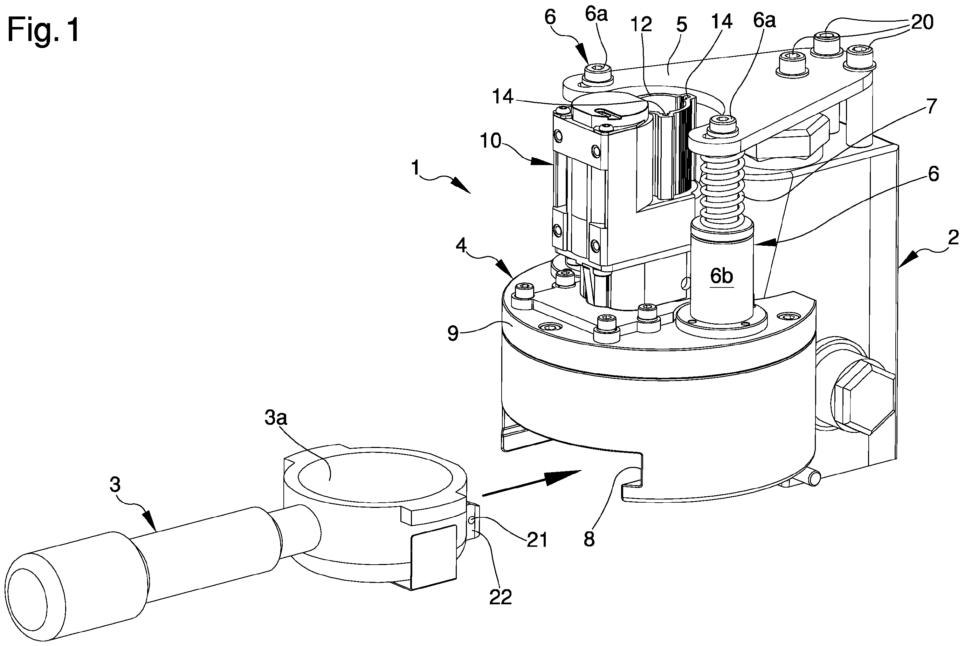

Figure 1 is an axonometric view of the device according to the invention;

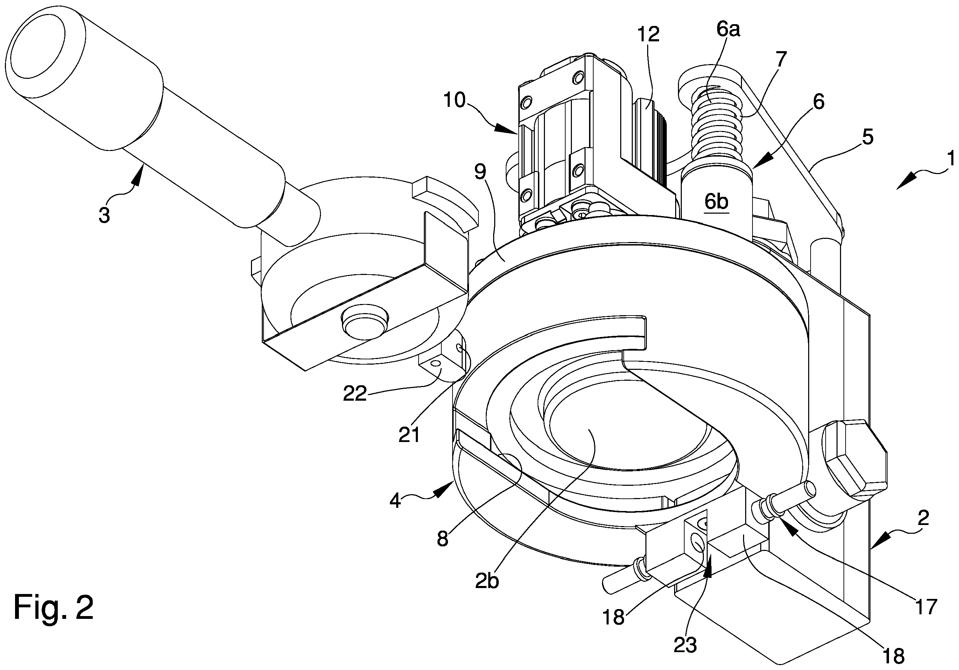

Figure 2 is an axonometric view, from another angle, of the device according to the invention;

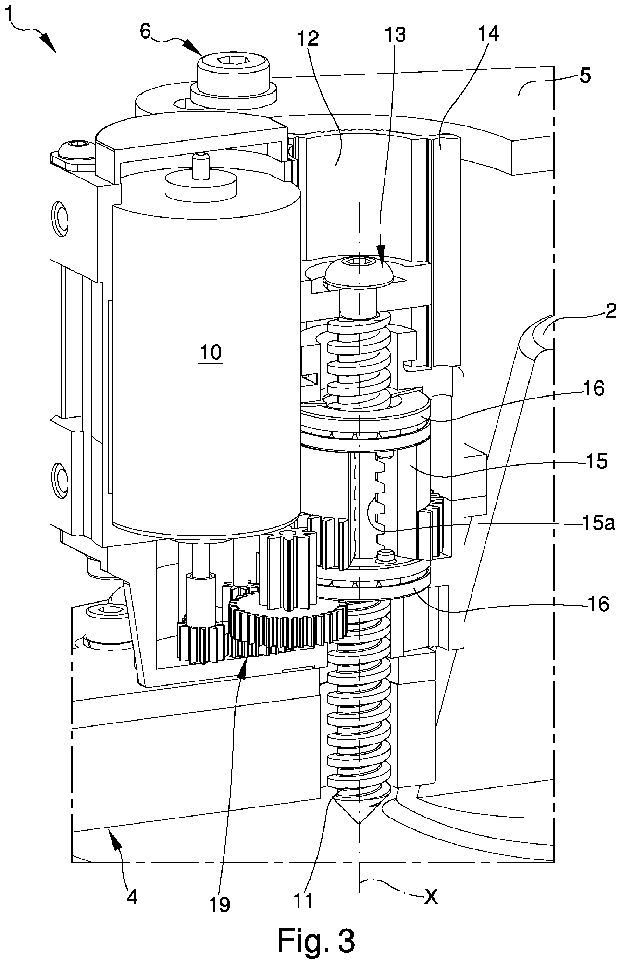

Figure 3 is a cutaway view, on an enlarged scale, of a detail of the device according to the invention;

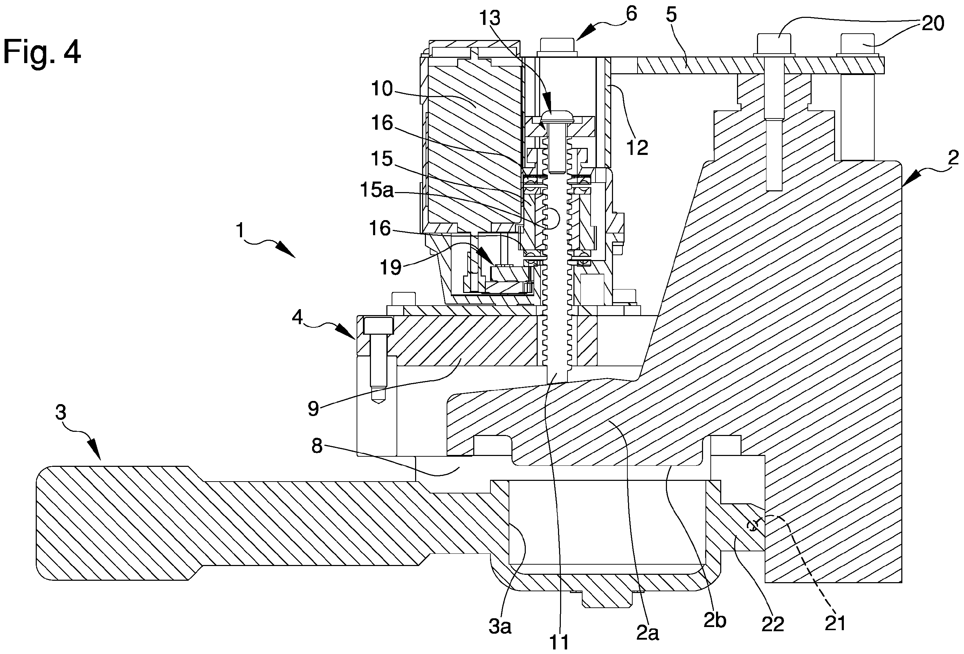

Figure 4 is a sectional view of the device according to the invention in the open position;

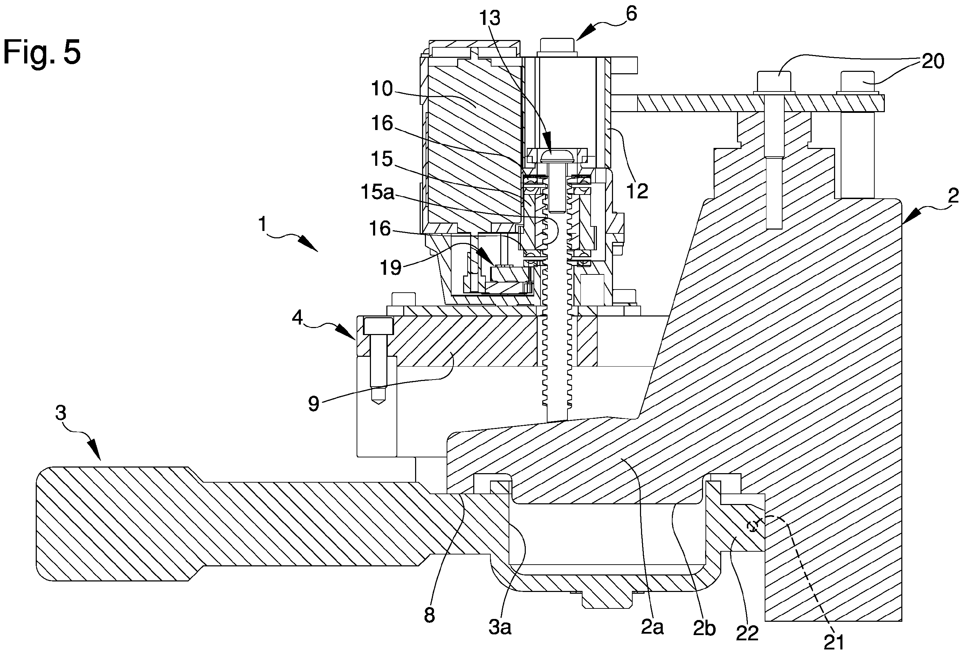

Figure 5 is a sectional view of the device according to the invention in the closed position.

### Embodiments of the Invention

With particular reference to such illustrations, reference number 1 globally indicates a device for the introduction and block of the filter holder in coffee machines.

The device 1 is associated with a dispensing assembly 2 of a coffee machine. The latter has a rounded body 2a with a lower abutment portion 2b (so-called "water-steam shower") able to be coupled to a filter holder 3 having a containment portion 3a in which the dose of coffee powder to be dispensed is inserted.

In particular, the device 1 comprises at least a movable body 4 associated with the dispensing assembly 2 in a sliding manner with respect thereto.

The device 1 also comprises sliding means 10, 11, 15 associated with the movable body 4 and able to make the movable body 4 to slide along a main direction X.

Advantageously, this main direction X is substantially vertical.

As illustrated in the figures, the movable body is associated with the dispensing assembly by means of connecting means 5, 6 able to guide the movable body 4 along the main direction X.

Conveniently, the connecting means 5, 6 comprise at least a plate-shaped element 5 associated with the dispensing assembly 2 and at least a connecting element 6 that extends along the main direction X and interposed between the plate-shaped element 5 and the movable body 4.

In particular, the connecting element 6 has a first portion 6a associated with the plate-shaped element 5 and a second portion 6b associated with the movable body 4 and sliding towards and away from the first portion 6a.

In the present embodiment there are two connecting elements 6 and each comprises a spring element 7 interposed between the first portion 6a and the second portion 6b.

As shown in the figures, the plate-shaped element 5 is fixed to the dispensing assembly by means of fixing screws 20.

The movable body 4 is associated in turn with the plate-shaped element 5 by means of the connecting element 6.

The particular configuration of the connecting element 6 enables the latter, thanks to the spring element 7, to apply a thrust on the movable body 4 downwards and along the main direction X.

Different embodiments cannot however be ruled out wherein, e.g., the connecting means 5, 6 comprise alternative solutions such as fixing plates and welding between the dispensing assembly 2 and the plate-shaped element 5, or a different number of connecting elements 6.

The movable body 4 also has a seat 8 arranged below the lower abutment portion 2b and able to accommodate the filter holder 3.

In particular, the seat 8 is configured as a housing formed in the lower portion of the movable body 4, with a shape and dimensions such as to enable the housing substantially to measure of the filter holder 3.

In the present embodiment, the movable body 4 has a substantially hollow cylindrical shape, defining partly the seat 8 and closed at the top by a cover 9 arranged above the rounded body 2a.

This way, as shown in the illustrations, the filter holder 3 inserted in the seat 8 has the containment portion 3a, containing coffee powder, facing towards the rounded body 2a.

Alternative solutions cannot be ruled out which provide different forms of the movable body 4, provided they are compatible with the function of the device 1 to dispense coffee.

In particular, the movable body 4 can be adapted to the various models of dispensing assembly 2, whether they are of the already existing or newly developed type.

The movable body 4, furthermore, by sliding along the main direction X, switches from an opening position to a closing position.

In particular, in the opening position the distance between the seat 8 and the lower abutment portion 2b is maximum and the filter holder is insertable into and removable from the seat 8.

In the closing position, on the other hand, the distance between the seat 8 and the lower abutment portion 2b is minimal and the filter holder 3 is blocked in the seat 8.

In particular, in the closing position, the filter holder 3 is brought to adhere to the rounded body 2a so as to apply on the coffee powder the pressure required by the compaction operation that precedes dispensing.

According to the invention, the sliding means 10, 11, 15 comprise at least an electric motor 10 mounted on the movable body 4 and at least a screw-nut screw system 11, 15 connected to the electric motor 10, with the electric motor 10 able to provide motion to the movable body 4 by means of the screw-nut screw system 11, 15.

In particular, the screw-nut screw system 11, 15 comprises at least a support screw 11 substantially fixed and that extends along the main direction X resting on the rounded body 2a of the dispensing assembly 2.

Usefully, the support screw 11 is associated with an anti-rotation assembly 12, 13 able to keep the support screw 11 fixed with respect to the movable body 4. In particular, the anti-rotation assembly 12, 13 is formed by a blocking support 12 and a blocking body 13.

The blocking support 12 is locked together with the movable body 4 and has a longitudinal guide 14 extending along the main direction X.

The blocking body 13 is locked together with the support screw 11 and is engaged along the longitudinal guide 14 so as to enable the whole system to move in translation along the main direction X and to prevent the support screw 11 from rotating on itself.

The screw-nut screw system 11, 15 also comprises a cylindrical body 15 mounted on the movable body 4 and having a nut screw 15a engaged around the support screw 11.

The cylindrical body 15 is connected to the electric motor 10 and is able to slide along the support screw 11 due to the rotary motion of the electric motor itself.

As illustrated in the figures, the cylindrical body 15 is kinematically connected to the electric motor 10 through a reduction unit 19 with a series of gears able to transfer the rotary motion from the aforementioned motor to the cylindrical body itself.

This way, the cylindrical body 15 can rotate around the support screw 11 and, due to the screw-nut screw coupling, move up and down along it.

At the ends of the cylindrical body 15 are fitted two thrust bearings 16 placed between the movable body 4 and the cylindrical body 15.

The thrust bearings 16, in practice, allow the cylindrical body 15 to rotate with respect to the movable body 4 and to push it in a translational motion along the main direction X when the cylindrical body 15 is screwed, in one direction or the other, on the support screw 11.

Advantageously, the device 1 comprises sensor means 17 able to detect the position of the filter holder 3 inside the seat 8 and operatively connected to the electric motor 10.

The actuation of the electric motor 10, in fact, is governed by the sensor means 17.

In particular, the sensor means 17 are connected to the electric motor 10 by interposition of a processing and control unit, of the type of an electronic control unit, which manages the switching on and off of the electric motor 10 according to what has been detected by the sensor means 17.

The sensor means 17 comprise at least a sensor element 18 associated with the movable body 4 and able to detect the presence of the filter holder 3 when it is inserted in the seat 8.

In the present embodiment, the sensor element 18 is of the "Hall effect" sensor type, i.e. a transducer sensitive to the magnetic field, and the filter holder 3 has at least a magnetized body 21, of a permanent magnet type or the like, which, when the filter holder 3 is inserted inside the seat 8, is located in the proximity of the sensor element 18.

For this purpose, the filter holder 3 has a protruding appendix 22 intended to fit into a corresponding cavity 23 formed on the movable body 4 when the filter holder 3 is introduced into the seat 8.

The sensor element 18 is mounted at the cavity 23 and the magnetized body 21 is mounted on the protruding appendix 22; this way, when the filter holder 3 is introduced inside the seat 8, the magnetized body 21 reaches the sensor element 18 which, by detecting the magnetic field thereof, produces an electronic signal that alerts the system of the presence of the filter holder 3 in the seat 8.

In detail, the electronic signal consists of an enabling signal for the actuation of the electric motor 10; in other words, the electric motor 10 is normally off and cannot be activated as long as the filter holder 3 is inserted in the seat 8, so as to avoid the possibility that the switch of the movable body 4 from the opening position to the closing position can cause damage to objects or injury to persons.

In the context of this specification, by enabling signal for the actuation of the electric motor 10 is meant a signal which can consist of:
- an authorization signal, which means that, when the filter holder 3 is introduced into the seat 8, then the operator of the coffee machine can operate the electric motor 10 by means of a button or the like which, in the absence of the filter holder 3, is instead ineffective; or
- an automatic control signal of the electric motor 10, which means that the electric motor 10 is activated automatically by the mere fact of having introduced the filter holder 3 into the seat 8 without the operator of the coffee machine having to press any buttons.

Usefully, in the embodiment shown in the figures, the sensor elements 18 are two in number.

This way it is possible to provide two different types of filter holder 3:
- in a first type of filter holder 3, the containment portion 3a has a capacity such as to contain only one dose of coffee 3a and there is only one magnetized body 21;
- in a second type of filter holder 3, the containment portion 3a has a capacity such as to contain two doses of coffee 3a and there are two magnetized bodies 21.

When in the seat 8 is introduced the first type of filter holder 3, then only one of the two sensor elements 18 is energized while, when in the seat 8 is introduced the second type of filter holder 3, then both sensor elements 18 are energized.

It is easy to understand, therefore, that such sensor means 17 enable the device 1 (and, consequently, the coffee machine with the device 1) to recognize in a practical and easy manner not only whether the filter holder 3 is inserted in the seat 8, but also whether it is a filter holder 3 which contains one dose of coffee or two doses of coffee, to set the dispensing of a corresponding amount of steam through the filter holder 3, optionally in a completely automated way.

It is also emphasized that alternative solutions cannot be ruled out wherein the sensor means 17 are different to the Hall effect sensors, provided that they are able to detect the position of the filter holder 3 inside the seat 8 and to send a corresponding signal to the electric motor 10 to command its start in the desired times.

When reaching the closing position, the electric motor 10 stops; in this regard the processing and control unit is able to manage the switch off of the electric motor, by interrupting its power supply.

The operation of the present invention is as follows.

By inserting the filter holder 3 containing the coffee powder in the seat 8, the sensor means 17 detect its position.

At this point, in an automatic way or by means of a command button, it is possible to activate the electric motor 10, which starts and transfers the rotary motion to the cylindrical body 15 by means of the reduction unit 19.

The cylindrical body 15, thanks to the screw-nut screw system 11, 15, moves up along the main direction X guided by the support screw 11.

The latter, due to the rotation of the cylindrical body 15, is pushed downwards against the rounded body 2a and, due to the anti-rotation assembly 12, 13, does not rotate on itself and keeps stationary.

The cylindrical body 15, being associated with the thrust bearings 16, drags the movable body 4 with it and, then, the seat 8 with the filter holder 3, lifting it.

In particular, the filter holder 3 is brought to adhere to the rounded body 2a so as to compress the coffee contained in it and, thanks to the action of the electric motor 10, with pressures so as to ensure a sealing force even higher than 1000 N.

The power supply of the electric motor 10 and the lifting of the movable body 4 stop when reaching the closing position.

With the stop of the electric motor 10, the coffee dispensing can start.

At the end of the latter, the movable body 4 is dragged downwards with operations that are similar to those described above, with the difference that the direction of rotation of the cylindrical body 15 is opposite to the previous one. It has in practice been found that the described invention achieves the intended objects and in particular the fact is underlined that the device, besides allowing to automate the introduction and blocking operations of the filter holder, ensures the successful dispensing of the coffee because the strength with which the filter holder is kept in contact with the rounded body is sufficient to minimize the risk of spills of liquids or other material.

Furthermore, the device described above is easily applicable to every already existing coffee machine, thus being simple to assemble and particularly advantageous in terms of productivity, since the manual operations required are minimal.

## Claims

1. Device (1) for the introduction and block of the filter holder in coffee machines, associated with a dispensing assembly (2) of a coffee machine with a rounded body (2a) having a lower abutment portion (2b) able to be coupled to a filter holder, comprising:
- at least a movable body (4) associated with said dispensing assembly (2) in a sliding manner with respect thereto and having a seat (8) arranged below said lower abutment portion (2b) and able to accommodate said filter holder (3);
- sliding means (10, 11, 15) associated with said movable body (4) and able to make said movable body (4) to slide along a main direction (X) between an opening position, in which the distance between said seat (8) and said lower abutment portion (2b) is maximum and said filter holder (3) is insertable into and removable from said seat (8), and a closing position, in which the distance between said seat (8) and said lower abutment portion (2b) is minimal and said filter holder (3) is blocked in said seat (8), wherein said sliding means (10, 11, 15) comprise at least an electric motor (10) mounted on said movable body (4) and at least a screw-nut screw system (11, 15) connected to said electric motor (10), said electric motor (10) being able to provide motion to said movable body (4) by means of said screw-nut screw system (11, 15);
**characterized by** the fact that said screw-nut screw system (11, 15) comprises:
- at least a support screw (11) substantially fixed, that extends along said main direction (X) and that rests on said rounded body (2a); and
- a cylindrical body (15) mounted on said movable body (4) and having a nut screw (15a) engaged around said support screw (11), and connected to said electric motor (10) and able to slide along said support screw (11) due to the rotary motion of the electric motor (10).

2. Device (1) according to claim 1, **characterized by** the fact that said movable body (4) has a substantially hollow cylindrical shape closed at the top by a cover (9) arranged above said rounded body (2a).

3. Device (1) according to one or more of the preceding claims, **characterized by** the fact that said main direction (X) is substantially vertical.

4. Device (1) according to one or more of the preceding claims, **characterized by** the fact that it comprises connecting means (5, 6) between said movable body (4) and said dispensing assembly (2) and able to guide said movable body (4) along said main direction (X).

5. Device (1) according to claim 4, **characterized by** the fact that said connecting means (5, 6) comprise at least a plate-shaped element (5) associated with said dispensing assembly (2) and at least a connecting element (6) that extends along said main direction (X) and interposed between said plate-shaped element (5) and said movable body (4).

6. Device (1) according to claim 5, **characterized by** the fact that said connecting element (6) has a first portion (6a) associated with said plate-shaped element (5) and a second portion (6b) associated with said movable body (4) and sliding towards and away from said first portion (6a).

7. Device (1) according to claim 6, **characterized by** the fact that said connecting element (6) comprises a spring element (7) interposed between said first portion (6a) and said second portion (6b).

8. Device (1) according to one or more of the preceding claims, **characterized by** the fact that said support screw (11) is associated with an anti-rotation assembly (12, 13) able to keep said support screw (11) fixed with respect to said movable body (4).

9. Device (1) according to claim 8, **characterized by** the fact that said anti-rotation assembly (12, 13) comprises:
- at least a blocking support (12) associated with said movable body (4) and having at least a longitudinal guide (14) extending along said main direction (X); and
- at least a blocking body (13), positioned in said guide (14), associated with said support screw (11) and engaged along said longitudinal guide (14).

10. Device (1) according to one or more of the preceding claims, **characterized by** the fact that it comprises sensor means (17) able to detect the position of said filter holder (3) inside said seat (8) and operatively connected to said electric motor (10), the actuation of said electric motor (10) being governed by said sensor means (17).

11. Device (1) according to claim 10, **characterized by** the fact that said sensor means (17) comprise at least a sensor element (18) associated with said movable body (4), wherein said sensor element (18) is of the "Hall effect" type and said filter holder (3) has at least a magnetized body (21) that can be placed in the proximity of said sensor element (18) when said filter holder (3) is inserted within said seat (8).

12. Device (1) according to claim 10 or 11, **characterized by** the fact that said sensor means (17) are able to recognize whether said filter holder (3) contains one dose of coffee or two doses of coffee.

## Patentansprüche

1. Vorrichtung (1) für die Einführung und Verriegelung des Filterhalters in Kaffeemaschinen, die verbunden ist mit einer Ausgabeeinheit (2) einer Kaffeemaschine mit abgerundetem Gehäuse (2a), das einen unteren Abstützbereich (2b) aufweist, der mit einem Filterhalter gekoppelt werden kann, mit:
- wenigstens einem beweglichen Gehäuse (4), das mit der Ausgabeeinheit (2) in gleitender Weise in Bezug zueinander verbunden ist und einen Sitz (8) aufweist, der unterhalb des unteren Abstützbereichs (2b) angeordnet ist und den Filterhalter (3) aufnehmen kann;
- einer Gleiteinrichtung (10, 11, 15), die mit dem beweglichen Gehäuse (4) verbunden ist und das bewegliche Gehäuse (4) entlang einer Hauptrichtung (X) zwischen einer Öffnungsposition, in welcher der Abstand zwischen dem Sitz (8) und dem unteren Abstützbereich (2b) maximal ist und der Filterhalter (3) in dem Sitz (8) einsetzbar und aus diesem entfernbar ist, und einer Schließposition, in welcher der Abstand zwischen dem Sitz (8) und dem unteren Abstützbereich (2b) minimal ist und der Filterhalter (3) in dem Sitz (8) verriegelt ist, in ein Gleiten versetzen kann, wobei die Gleiteinrichtung (10, 11, 15) umfasst wenigstens einen Elektromotor (10), der auf dem beweglichen Gehäuse (4) angebracht ist und wenigstens ein Schraube/Mutter-Schraubsystem (11, 15), das mit dem Elektromotor (10) verbunden ist, wobei der Elektromotor (10) das bewegliche Gehäuse (4) mittels dem Schraube/Mutter-Schraubsystem (11, 15) in Bewegung versetzen kann;
**dadurch gekennzeichnet, dass** das Schraube/Mutter-Schraubsystem (11, 15) umfasst:
- wenigstens eine im Wesentlichen fixierte Stützschraube (11), die sich entlang der Hauptrichtung (X) erstreckt und die sich auf dem abgerundeten Gehäuse (2a) aufstützt; und
- ein zylindrisches Gehäuse (15), das auf dem beweglichen Gehäuse (4) angebracht ist und eine Mutternschraube (15a) aufweist, die um die Stützschraube (11) herumgreift und mit dem Elektromotor (10) verbunden ist und in der Lage ist, aufgrund der Drehbewegung des Elektromotors (10) die Stützschraube (11) entlang zu gleiten.

2. Vorrichtung (1) nach Anspruch 1, **dadurch gekennzeichnet, dass** das bewegliche Gehäuse (4) eine im Wesentlichen hohlzylindrische Form hat, die an der Oberseite durch eine oberhalb des abgerundeten Gehäuses (2a) angeordnete Abdeckung (9) geschlossen ist.

3. Vorrichtung (1) nach einem oder mehreren der vorhergehenden Ansprüche, **dadurch gekennzeichnet, dass** die Hauptrichtung (X) im Wesentlichen vertikal ist.

4. Vorrichtung (1) nach einem oder mehreren der vorhergehenden Ansprüche, **dadurch gekennzeichnet, dass** diese Verbindungsmittel (5, 6) zwischen dem beweglichen Gehäuse (4) und der Ausgabeeinheit (2) umfasst, um das bewegliche Gehäuse (4) entlang der Hauptrichtung (X) zu führen.

5. Vorrichtung (1) nach Anspruch 4, **dadurch gekennzeichnet, dass** die Verbindungsmittel (5, 6) umfassen wenigstens ein plattenförmiges Element (5), das mit der Ausgabeeinheit (2) verbunden ist, und wenigstens ein Verbindungselement (6), das sich entlang der Hauptrichtung (X) erstreckt und zwischen dem plattenförmigen Element (5) und dem beweglichen Gehäuse (4) angeordnet ist.

6. Vorrichtung (1) nach Anspruch 5, **dadurch gekennzeichnet, dass** das Verbindungselement (6) aufweist einen ersten Abschnitt (6a), der mit dem plattenförmigen Element (5) verbunden ist, und einen zweiten Abschnitt (6b), der mit dem beweglichen Gehäuse (4) verbunden ist und in Richtung des ersten Abschnitts (6a) und von diesem weg gleitet.

7. Vorrichtung (1) nach Anspruch 6, **dadurch gekennzeichnet, dass** das Verbindungselement (6) ein Federelement (7) umfasst, das zwischen dem ersten Abschnitt (6a) und dem zweiten Abschnitt (6b) angeordnet ist.

8. Vorrichtung (1) nach einem oder mehreren der vorhergehenden Ansprüche, **dadurch gekennzeichnet, dass** die Stützschraube (11) mit einer drehgesicherten Einheit (12, 13) verbunden ist, welche die Stützschraube (11) in Bezug zu dem beweglichen Gehäuse (4) fixiert halten kann.

9. Vorrichtung (1) nach Anspruch 8, **dadurch gekennzeichnet, dass** die drehgesicherte Einheit (12, 13) umfasst:
- wenigstens eine blockierende Unterstützung (12), die mit dem beweglichen Gehäuse (4) verbunden ist und wenigstens eine Längsführung (14) aufweist, die sich entlang der Hauptrichtung (X) erstreckt; und
- wenigstens einen Blockierkörper (13), der in der Führung (14) positioniert ist, mit der Stützschraube (11) verbunden ist und in die Längsführung (14) eingreift.

10. Vorrichtung (1) nach einem oder mehreren der vorhergehenden Ansprüche, **dadurch gekennzeichnet, dass** diese umfasst Sensormittel (17), welche die Position des Filterhalters (3) innerhalb des Sitzes (8) erfassen können und betriebsfähig mit dem Elektromotor (10) verbunden sind, wobei die Betätigung des Elektromotors (10) durch die Sensormittel (17) geregelt wird.

11. Vorrichtung (1) nach Anspruch 10, **dadurch gekennzeichnet, dass** die Sensormittel (17) wenigstens ein Sensorelement (18) umfassen, das mit dem beweglichen Gehäuse (4) verbunden ist, wobei das Sensorelement (18) vom "Hall-Effekt"-Typ ist und der Filterhalter (3) wenigstens einen magnetisierten Körper (21) aufweist, der in der Nähe des Sensorelements (18) angeordnet werden kann, wenn der Filterhalter (3) in den Sitz (8) eingesetzt ist.

12. Vorrichtung (1) nach Anspruch 10 oder 11, **dadurch gekennzeichnet, dass** die Sensormittel (17) erkennen können, ob der Filterhalter (3) eine Dosis Kaffee oder zwei Dosen Kaffee enthält.

## Revendications

1. Dispositif (1) pour l'introduction et le blocage du porte-filtre dans des machines à café, associé à un ensemble de distribution (2) d'une machine à café ayant un corps arrondi (2a) comportant une partie de butée inférieure (2b) apte à être raccordée à un porte-filtre, comprenant :
- au moins un corps mobile (4) associé audit ensemble de distribution (2) d'une manière coulissante par rapport à celui-ci et comprenant un siège (8) agencé en dessous de ladite partie de butée inférieure (2b) et apte à recevoir ledit porte-filtre (3) ;
- des moyens de coulissement (10, 11, 15) associés audit corps mobile (4) et aptes à faire coulisser ledit corps mobile (4) le long d'une direction principale (X) entre une position d'ouverture, dans laquelle la distance entre ledit siège (8) et ladite partie de butée inférieure (2b) est maximale et ledit porte-filtre (3) peut être inséré dans le siège (8) et retiré de celui-ci, et une position de fermeture, dans laquelle la distance entre ledit siège (8) et ladite partie de butée inférieure (2b) est minimale, et ledit porte-filtre (3) est bloqué dans ledit siège (8), dans lequel les moyens de coulissement (10, 11 15) comprennent au moins un moteur électrique (10) monté sur ledit corps mobile (4) et au moins un système vis-écrou (11, 15) connecté audit moteur électrique (10), ledit moteur électrique (10) étant apte à fournir un mouvement audit corps mobile (4) au moyen dudit système vis-écrou (11, 15) ;
**caractérisé par le fait que** ledit système vis-écrou (11, 15) comprend :
- au moins une vis de support (11) sensiblement fixe, qui s'étend le long de ladite direction principale (X) et qui repose sur ledit corps arrondi (2a) ; et
- un corps cylindrique (15) monté sur ledit corps mobile (4) et ayant un écrou (15a) en prise autour de ladite vis de support (11), et connecté audit moteur électrique (10) et apte à coulisser le long de ladite vis de support (11) du fait du mouvement rotatif du moteur électrique (10).

2. Dispositif (1) selon la revendication 1, **caractérisé par le fait que** ledit corps mobile (4) présente une forme cylindrique sensiblement creuse fermée sur le dessus par un couvercle (9) agencé au-dessus dudit corps arrondi (2a).

3. Dispositif (1) selon l'une ou plusieurs des revendications précédentes, **caractérisé par le fait que** ladite direction principale (X) est sensiblement verticale.

4. Dispositif (1) selon l'une ou plusieurs des revendications précédentes, **caractérisé par le fait qu'**il comprend des moyens de connexion (5, 6) entre ledit corps mobile (4) et ledit ensemble de distribution (2) et aptes à guider ledit corps mobile (4) le long de ladite direction principale (X).

5. Dispositif (1) selon la revendication 4, **caractérisé par le fait que** lesdits moyens de connexion (5, 6) comprennent au moins un élément en forme de plaque (5) associé audit ensemble de distribution (2) et au moins un élément de connexion (6) qui s'étend le long de ladite direction principale (X) et interposé entre ledit élément en forme de plaque (5) et ledit corps mobile (4).

6. Dispositif (1) selon la revendication 5, **caractérisé par le fait que** ledit élément de connexion (6) comporte une première partie (6a) associée audit élément en forme de plaque (5) et une seconde partie (6b) associée audit corps mobile (4) et coulissant vers et à l'opposé de ladite première partie (6a).

7. Dispositif (1) selon la revendication 6, **caractérisé par le fait que** ledit élément de connexion (6) comprend un élément ressort (7) interposé entre ladite première partie (6a) et ladite seconde partie (6b).

8. Dispositif (1) selon l'une ou plusieurs des revendications précédentes, **caractérisé par le fait que** ladite vis de support (11) est associée à un ensemble anti-rotation (12, 13) apte à maintenir ladite vis de support (11) immobile par rapport audit corps mobile (4).

9. Dispositif (1) selon la revendication 8, **caractérisé par le fait que** l'ensemble anti-rotation (12, 13) comprend :
- au moins un support de blocage (12) associé audit corps mobile (4) et comprenant au moins un guide longitudinal (14) s'étendant le long de ladite direction principale (X) ; et
- au moins un corps de blocage (13), positionné dans ledit guide (14), associé à ladite vis de support (11) et en prise le long dudit guide longitudinal (14).

10. Dispositif (1) selon l'une ou plusieurs des revendications précédentes, **caractérisé par le fait qu'**il comprend des moyens de détection (17) aptes à détecter la position dudit porte-filtre (3) dans ledit siège (8) et connectés de manière opérationnelle audit moteur électrique (10), le mise en action dudit moteur électrique (10) étant régie par lesdits moyens de détection (17).

11. Dispositif (1) selon la revendication 10, **caractérisé par le fait que** lesdits moyens de détection (17) comprennent au moins un élément de détection (18) associé audit corps mobile (4), dans lequel ledit élément de détection (18) est du type « à effet Hall » et ledit porte-filtre (3) comporte au moins un corps aimanté (21) qui peut être placé à proximité dudit élément de détection (18) lorsque ledit porte-filtre (3) est inséré dans ledit siège (8).

12. Dispositif (1) selon la revendication 10 ou 11, **caractérisé par le fait que** lesdits moyens de détection (17) sont aptes à reconnaître si le porte-filtre (3) contient une dose de café ou deux doses de café.
